# EUROPEAN PATENT APPLICATION

(11) **EP 3 875 739 A1**
(43) Date of publication of application: **08.09.2021**
(21) Application number: 20185274.6
(22) Date of filing: 10.07.2020
(51) Int. Cl.: F01M 1/10, F01M 11/03, F16N 39/06, B01D 29/21, B01D 35/147

(54) **FILTER ASSEMBLY**

(30) Priority: 03.03.2020 EP 20160795
(71) Applicant: Illinois Tool Works INC., Glenview, IL 60025 (US)
(72) Inventor: COUTY, Franck, Illinois, 60025 (US); DANTAN, Gwenaël, Illinois, 60025 (US)
(74) Representative: HGF

(57) **Abstract**

A filter assembly (1, 100), which includes a hollow pleated filter element (2, 102) with an open end, a support coil (5, 150a) received within the filter element (2, 102) and an end cap (4, 104) sealingly mounted to the open end. The end cap (4, 104) has an outlet (43, 45, 143) in fluid communication with the open end. The support coil (5, 150a) is configured to inhibit collapse of the filter element (2, 102) when a fluid passes from outside of the filter element (2, 102) to the inside thereof and through the outlet (43, 45, 143) of the end cap (4, 104).

## Description

This invention relates generally to a filter assembly for use in vehicles. More specifically, although not exclusively, this invention relates to filter assemblies for incorporation in a transmission lubrication circuit of a vehicle, a lubrication circuit comprising such a filter assembly and a vehicle comprising such a filter assembly or lubrication circuit.

The components of vehicle transmission units operate at high rotational speeds and under heavy loads. As a result, friction effects cause components to operate at high temperatures. To provide cooling and prolong the operational life of components, transmission units include a lubrication circuit. Such lubrication circuits are often of the force-feed lubrication' type, including an oil pump that continuously draws lubricant from a reservoir and through a filter, prior to being applied to rotating components. The lubricant then returns to the fluid reservoir and the cycle continues.

The lubricant collects foreign matter from the components of the transmission, as it circulates through the circuit. The filter is arranged so as to remove particles above a certain size, prior to being applied to rotating components. These filters typically have an average pore size of between 25 and 70 microns.

Such filters fail to retain very small impurities, which may cause issues to components of a transmission unit. In order to remove such impurities, a fine filtration media is required. Such fine filtration media can cause a substantial pressure drop. As a result, the flow area across the filtration media required to maintain the necessary flow rate of lubricant would be prohibitively large.

It is known to provide this fine filtration media in a bypass line, which enables effective filtration over time. However, passage of the lubricant through the filter assembly can collapse the filter media, as a result of the increased viscosity of common lubricants at low temperatures. To prevent this collapse, a plastic scaffold is provided to support the filter element and a valve is provided to bypass the filter element while the lubricant is cold and viscous.

It is a non-exclusive object of the invention to provide a simpler and/or improved filter assembly that mitigates at least some of the drawbacks of known filter assemblies.

Accordingly, a first aspect of the invention provides a filter assembly, e.g. for use in a vehicle, comprising a filter element with an open end, a support coil received within the filter element and an end cap sealingly mounted to the open end and having an outlet in fluid communication with the open end, wherein the support coil is configured to inhibit, in use, collapse of the filter element when a fluid passes through a wall of the filter element and/or from the outside of the filter element to the inside thereof and through the outlet of the end cap.

The filter element may be pleated or comprise a pleated filter element. The filter element may be hollow and/or comprise a tubular filter or tubular filter element. In embodiments, at least a portion of the support coil may contact an inner surface of the filter element. The filter element may bear, in use, against the support coil, for example when fluid passes through a wall of the filter element and/or from the outside of the filter element to the inside thereof and through the outlet of the end cap.

The end cap may comprise a first end cap. The open end may comprise a first open end. The filter assembly may comprise a further, e.g. a second, open end. The filter assembly may comprise a second or bypass end cap, hereinafter bypass end cap. The filter assembly may comprise a valve or bypass valve, hereinafter bypass valve. The bypass end cap may be sealingly mounted to a further open end of the filter element. The bypass end cap may comprise a bypass inlet, e.g. an aperture or orifice. The bypass valve may be configured to control the flow of fluid through, or along the, or a portion of the, filter assembly, e.g. from the bypass inlet to the outlet.

The bypass valve may be biased to close the bypass inlet, for example until the pressure exerted, in use, on the bypass valve, or an element or component thereof, reaches a predetermined threshold to open the bypass valve. The bypass valve may comprise a valve member and/or a valve seat. The valve member may be mounted, e.g. movably mounted, to the bypass end cap or relative thereto. The bypass end cap may comprise the valve seat, which may surround or circumscribe the bypass inlet. The valve member may be biased toward the valve seat. The valve member may be biased to engage the valve seat, for example until the pressure exerted thereon reaches a predetermined threshold, e.g. to open the bypass valve. The valve member may comprise a flat or curved surface for engaging the valve seat. The valve member may comprise an engaging portion or plate, which may have a flat or curved or spherical engaging surface, and a projection extending from the engaging portion, e.g. for engaging the support coil. The valve member may comprise a spherical member.

The support coil may comprise a spring. The valve member may be biased by the support coil, e.g. to close the bypass inlet. The valve member may be biased by the support coil against the valve seat. A first end of the support coil may engage or bear against the end cap or first end cap. A second end of the support coil may engage or bear against the valve member. The support coil may be compressed, in use, between the end caps, e.g. to provide a biasing force to the valve member and/or to retain the valve member in a closed position and/or against the valve seat.

The support coil may comprise a support spring portion and/or a valve spring portion. The valve member may be biased by the valve spring portion. The bypass end cap may comprise a retainer. The retainer may receive at least part of the bypass valve and/or valve member and/or valve spring portion. The retainer may surround the bypass inlet. The retainer may comprise a tubular member or frame. The retainer may, but need not, comprise an engaging element, abutment or retaining flange, e.g. for retaining or restraining the valve spring portion.

The valve member may be biased by the valve spring portion, e.g. to close the bypass inlet. The valve member may be biased by the valve spring portion against the valve seat.

The support spring portion may engage and/or receive and/or be received within at least part of the end cap or first end cap. The support spring portion, e.g. one end thereof, may engage and/or receive the retainer of the bypass end cap, e.g. an upper end thereof. The support spring portion and the valve spring may be coupled or integral and/or be provided in series with one another.

The support spring portion may have a larger diameter and/or pitch than the valve spring portion. The valve spring portion may have a substantially constant diameter, or a varying diameter. The valve spring portion may be conical. The diameter of the valve spring portion may reduce, e.g. gradually or in a step-wise manner. The diameter of the valve spring portion may reduce from its connection with the support spring portion to or toward the valve member and/or to a free end of the valve spring portion.

The support coil may comprise one or more additional spring portions, which may, but need not, be between the support spring portion and the valve spring portion. The support coil may comprise an intermediate spring portion, which may be between the support spring portion and the valve spring portion. The support spring portion may extend between and engage each end cap. The intermediate spring portion may comprise a diameter and/or pitch that is smaller than the support spring portion. The diameter of the intermediate spring protion may reduce, e.g. gradually or in a step-wise manner. The diameter of the intermediate spring portion may reduce from its connection with the support spring portion to or toward its connection with the valve spring portion. At least part of the intermediate spring portion and/or at least part of the valve spring portion may be nested within the support spring portion.

At least part of the support coil, e.g. the support spring portion and/or the valve spring portion, may comprise a metallic material, for example a stainless steel.

The end cap or first end cap may comprise a lid. The end cap or first end may comprise a projection or spigot, which may be received, e.g. engagingly received, within at least part, e.g. an end, of the support coil. The projection or spigot may comprise a passage or passageway, which may fluidly connect the outlet with the inside of the filter element. The projection or spigot may comprise an engaging element, abutment or retaining flange, e.g. for retaining or restraining the support coil or support spring portion.

The retainer of the bypass end cap may comprise an engaging element, abutment or retaining flange, e.g. for retaining or restraining at least part of the support coil. The retainer may comprise a pair of engaging elements, an abutment or a retaining flange, e.g. for retaining or restraining the valve spring portion and/or support spring portion.

The end cap or first end cap may comprise a peripheral wall, which may describe a recess and/or filter element receiving space. The peripheral wall and the projection or spigot may together describe an annular recess, and/or filter element receiving space, therebetween.

At least one of the end caps may comprise at least one mounting feature, e.g. for securing the filter assembly to a housing or tank. The mounting feature(s) may comprise one or more lug(s) and/or hole(s) or any other suitable mounting feature. At least one of the end caps may comprise sealing means, e.g. for sealingly mounting to a housing or tank. The sealing means may comprise one or more seals or annular grooves for receiving a seal.

The filter element may be substantially cylindrical, e.g. in the form of a hollow cylinder. The filter element may comprise or be formed of a pleated sheet of filter medium or material, which may be connected at its ends to form the hollow or tubular filter element. At least one, preferably each, end cap may be substantially circular in plan.

The filter element may be retained by one or each end cap. The filter element, e.g. an end portion thereof, may be embedded, e.g. partially embedded, within and/or fused to the end cap. The filter element may be retained, in compression or tension, between the first and second ends. The filter element may describe a passage, e.g. extending therealong. The passage may be central and/or may extend between the open ends and/or between the end caps. The passage may comprise a bypass passage, e.g. when the bypass valve is open, and/or may comprise a primary passage, e.g. when the bypass valve is closed.

The filter assembly may comprise a first or primary fluid path, which may extend through the filter element or from the outside of the filter element to the inside thereof and out through the outlet. The filter assembly may comprise a second or secondary or bypass fluid path, which may extend from the bypass inlet to the inside of the filter element and out through the outlet. The second or secondary or bypass fluid path may provide a bypass around the filter element. A portion of the first or primary fluid path, e.g. downstream of the tubular filter, may comprise a portion of the second or secondary or bypass fluid path.

The bypass valve may be operable such that, in use, when closed, fluid may flow along the first fluid path. The bypass valve may be operable such that, in use, and when opened, fluid may flow along the second fluid path, e.g. bypassing the filter element.

The filter assembly may comprise a hydraulic filter assembly, e.g. a lubricant filter assembly. The filter assembly may be a filter assembly of a vehicle, for example transmission, e.g. an automatic transmission. The filter assembly may be for filtering or removing contaminants from a hydraulic fluid, such as oil, e.g. engine oil, transmission oil or lubricating oil. The filter element may comprise a fine filter, e.g. for filtering contaminants which are as small as 7-15 microns. The filter element may comprise pores having a size, e.g. an average size, of less than 25 microns, preferably less than 20 microns. In examples, the filter element comprises pores having a size, e.g. an average size, of less than 18 microns, for example between 7 and 15 microns.

In some examples, the filter assembly may comprise a fuel filter assembly or an air filter assembly, or a filter assembly for any other form of fluid..

Another aspect of the invention provides a filter assembly comprising a filter element, e.g. a pleated filter element, with an open end and an end cap sealingly mounted to the open end and having an outlet in fluid communication with the open end, wherein the filter element is embedded, e.g. partially embedded, within and/or fused to the end cap.

At least one or each end cap may comprise an interface region, e.g. within which the filter element is embedded, e.g. partially embedded. At least one or each end cap, e.g. the interface region thereof, may comprise a pad, which may be circular or annular. At least a portion of the material of the interface region or pad may surround or envelop an embedded part or portion of the filter element.

Another aspect of the invention provides a vehicle fluid circuit comprising a filter assembly as described above.

The vehicle fluid circuit may comprise a hydraulic or air circuit. The vehicle fluid circuit may comprise a lubrication circuit. The vehicle fluid circuit may comprise a fluid pump, e.g. a hydraulic or pneumatic pump, which may be upstream or downstream of the filter assembly and/or may draw fluid therethrough. In examples where the fluid pump is upstream of the filter assembly, the pump may force the fluid through the filter element, e.g. from the outside to the inside thereof. In examples where the fluid pump is downstream of the filter assembly, the pump may draw the fluid through the filter element, e.g. by creating a relative vacuum within the filter element.

Another aspect of the invention provides a vehicle comprising a filter assembly as described above, or a vehicle fluid circuit as described above.

Another aspect of the invention provides a method of making a filter assembly, e.g. a filter assembly as described above.

The method may comprise mounting, e.g. sealingly mounting, an end cap to an open end of a filter element, e.g. a pleated filter element. The end cap may be mounted to the filter element such that an outlet of the end cap is in fluid communication with the open end. The method or mounting may comprise embedding part or a portion of the filter element within the end cap, e.g. within a portion of the end cap, such as a interface region or pad, which may be circular or annular.

The method or mounting may comprise heating the end cap or end cap portion, e.g. before embedding the or a filter element part or portion therein. The end cap or end cap portion may be heated using infrared, e.g. an infrared heater or infrared heating element. The end cap or end cap portion may be heated by hot mirror or hot plate. Other heating processes are also envisaged without departing from the scope of the invention.

The method may comprise placing or inserting support coil within the filter element. The support coil may be configured to inhibit, in use, collapse of the filter element when a fluid passes through a wall of the filter element and/or from the outside of the filter element to the inside thereof and through the outlet of the end cap.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

For the avoidance of doubt, the terms "may", "and/or", "e.g.", "for example" and any similar term as used herein should be interpreted as non-limiting such that any feature so-described need not be present. Indeed, any combination of optional features is expressly envisaged without departing from the scope of the invention, whether or not these are expressly claimed. The applicant reserves the right to change any originally filed claim or file any new claim accordingly, including the right to amend any originally filed claim to depend from and/or incorporate any feature of any other claim although not originally claimed in that manner.

Embodiments of the invention will now be described by way of example only with reference to the accompanying drawings in which:
Figure 1 is a schematic sectional isometric view of a filter assembly according to an embodiment of the invention; and
Figure 2 is a cross-sectional view of a filter assembly according to another embodiment of the invention.

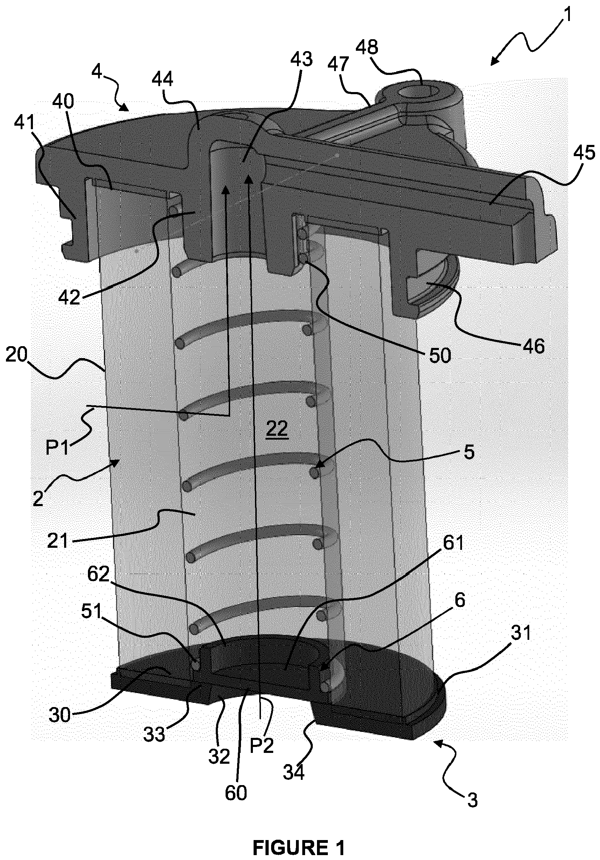

Referring now to Figure 1, there is shown a filter assembly 1 for use in a lubrication system of a vehicle (not shown). The filter assembly 1 has a filter media in the form of hollow pleated filter element 2 retained between and sealingly mounted to a pair of end caps 3, 4. A support spring 5 is received within the filter element 2 and extends between the end caps 3, 4. The end caps 3, 4 include a bypass end cap 3 and an outlet end cap 4. The filter assembly 1 is for incorporation within a vehicle lubrication circuit having a hydraulic pump (not shown) downstream of the filter assembly 1, which draws fluid therethrough. However, other arrangements are also envisaged.

The pleated filter element 2 is formed of a pleated sheet of porous material having an average pore size of between about 7 and 15 microns for filtering contaminants which are not filtered through the main filtration system. The filter element 2 includes an outer surface 20 and an inner surface 21. A central passage 22 is described by the inner surface 21 and extends between the end caps 3, 4. The porous material allows fluid, under pressure, to pass therethrough, from the outer surface 20 to the inner surface 21 and into the central passage 22.

The bypass end cap 3 is substantially circular and has an annular pad 30 surrounded by a peripheral recess 31. Central of the annular pad 30 is a circular aperture 32 describing a bypass inlet 32 to the filter assembly 1. A central portion of the annular pad 30 acts as a valve seat 33 surrounding the bypass inlet 32. The bypass inlet 32 has a taper 34 between an outer and inner surface of the bypass end cap 3.

The outlet end cap 4 is also substantially circular and has an annular pad 40 circumscribed by a peripheral wall 41. Central of the annular pad 40 is a circular protrusion or spigot 42 having a passage 43 extending therethrough. The filter element 2 is received within the annular recess described between the peripheral wall 41 and spigot 42.

In this example, the pleated filter element 2 is partially embedded within the annular pads 30, 40, thereby to secure the end caps 3, 4 to the filter element 2. This is achieved by heating the surface of the annular pads 30, 40 using infrared or a hot mirror, and pushing the pleated filter element 2 into the melted surface layer. However, it is also envisaged that the annular pads 30, 40 may be omitted, with the filter element 2 being secured to the end caps 3, 4 using hot melt. In other examples, the filter element 2 bears against the annular pads 30, 40, which retain the filter element 2 in compression.

The passage 43 projects through the outlet end cap 4 and into an integral outlet pipe 44 that describes an outlet channel 45 of the filter assembly 1. The outlet channel 45 is perpendicular to the passage 43 and to the longitudinal axis of the filter element 2, so as to divert fluid away from the filter assembly 1, in use.

An outer surface of the peripheral wall 41 has an annular groove 46 for receiving an annular seal (not shown) for sealing engagement with a housing or tank (not shown) of the lubrication circuit (not shown). A reinforcing rib 47 extends across the top of the outlet end cap 4, perpendicular to the outlet channel 45, and joins a pair of mounting lugs 48 (only one of which only one is shown).

The support spring 5 has a first end 50 that surrounds the spigot 42 of the outlet end cap 4 and bears against the outlet end cap 4. The support spring 5 has a second end 51 that engages a valve member 6. In the absence of external force, the support spring 5 urges the valve member 6 against the valve seat 33 of the bypass end cap 3, so as to close-off the bypass inlet 32 to the filter assembly 1.

The valve member 6 is substantially circular in plan, and includes a disc portion with a flat first surface 60 facing the valve seat 33, a flat second surface 61 opposite the first surface 60 and an annular wall 62 extends away from a flat second surface 61. The annular wall 62 is engagingly received in the second end 51 of the spring 5, thereby to retain the valve member 6 thereon. The disc portion has a larger diameter than that of the bypass inlet 32, such that the first surface 60 seats against the valve seat 33.

A first passageway P1 passes through the pleated filter element 2, from the outer surface 20 to the inner surface 21, into the central passage 22 and out through the passage 43 and outlet channel 45. The first passageway P1 therefore requires fluid to pass through the filter media of the pleated filter element 2.

When the valve member 6 is unseated from the valve seat 33, a second passageway P2 passes through the bypass inlet 32, along the central passage 22 and out through the passage 43 and outlet channel 45. The second passageway P2 therefore allows fluid to pass through the filter assembly 1 without passing through the filter media of the filter element 2.

The support spring 5 is sized to support the inner surface 21 of the filter element 2. As such, the support spring 5 provides resistance to collapsing forces applied to the pleated filter element 2, in use. The wire size used for the support spring 5 is selected to provide a balance between rigidity, for inhibiting collapse of the filter element 2, and the appropriate biasing force for the valve member 6.

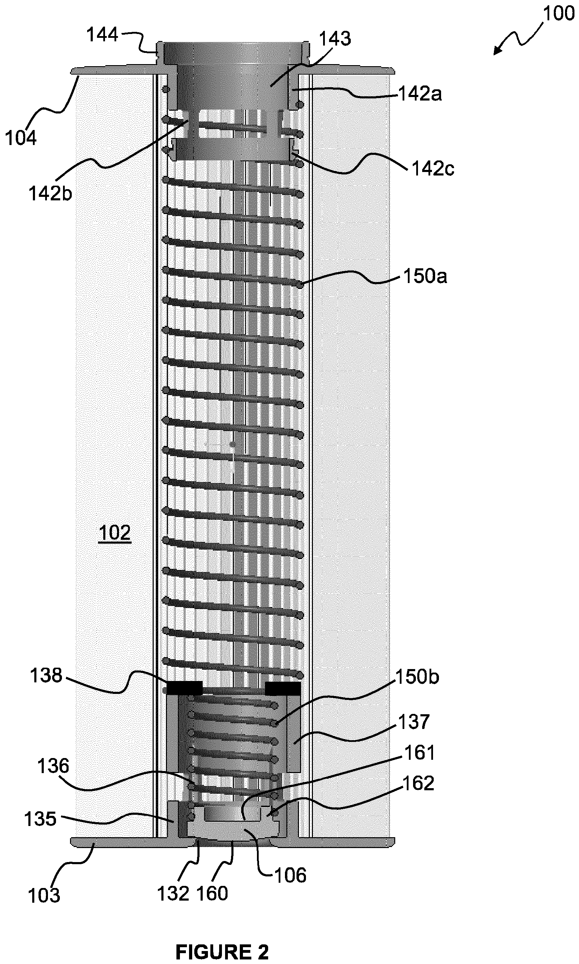

Referring now to Figure 2, there is shown a filter assembly 100. Like features to those of filter assembly 1 will be denoted by like references incremented by '100' and only the substantive differences will be described further below. The filter assembly 100 according to this example differs from that of Figure 1 in that the support spring 5 is stepped, providing two separate spring portions 150a, 150b. The spring portions 150a, 150b include a first, support spring portion 150a and a second, valve spring portion 150b.

The bypass end cap 103 includes an annular wall 135 extending into the pleated filter element 102. The annular wall 135 circumscribes the bypass inlet 132 and includes a valve retainer 137 connected to a base of the annular wall 135 by a series of webs 136 (of which two are shown). The valve retainer 137 receives the valve member 106 and valve spring portion 150b and includes an optional retaining flange 138, which retains the valve spring portion 150b therein. A first end of the valve spring 150b engagingly receives the annular wall 162 of the valve member 106 and a second end thereof engages the retaining flange 138, thereby to hold the valve spring portion 150b in compression. This provides the necessary biasing force to close the bypass inlet 132.

The outlet end cap 104 includes an annular wall 142a extending into the filter element 102, in place of the spigot 2 in the first example, and includes a barb retainer 142c connected to the annular wall 142a via webs 142b (of which two are shown). The barb retainer 142c engages and retains the support spring portion 150a in place. In this example, the outlet pipe 144 is coaxial with the passage 143, which extends through the outlet end cap 104 and into the outlet pipe 144.

The support spring portion 150a has a larger outer diameter and pitch than the valve spring portion 150b. The support spring portion 150a extends from the outlet end cap 104 to the valve retainer 137 of the bypass end cap 103 and is sized to support the filter element 102. The support spring portion 150a is retained at both of its ends, a first end by the valve retainer 137, and the other by the barb retainer 142c.

The support spring 150a therefore provides resistance to collapsing forces applied to the pleated filter element 2, while the valve spring portion 150b provides the biasing force for the valve member 106. As such, the wire size used for the support spring portion 150a is selected simply to provide sufficient rigidity for inhibiting collapse of the filter element 2, whereas the valve spring portion 150b can be selected to have the necessary spring constant. This provides a more flexible solution than the first example.

In addition, by reducing the outer diameter of the spring 105 in the valve spring portion 150b, operation of the valve member 106 is more reliable. More specifically, the compressive pressure exerted by the hydraulic fluid on the pleated filter element 2 of the filter assembly 1 can cause its inner surface 21 to bear against the spring 5 in the filter assembly 1 shown in Figure 1. This can increase the effective spring constant, and delay the unseating of the valve member 6 from the valve seat 33.

This issue is mitigated in the filter assembly 100 of Figure 2, since the diameter of the valve spring portion 150b is substantially less than that of the central passage 22, and it is isolated from the inner surface 21 by the valve retainer 137.

It will be appreciated by those skilled in the art that several variations to the aforementioned embodiments are envisaged without departing from the scope of the invention. For example, the filter assembly 1 need not be a lubricant filter assembly 1. It may, for example, be a fuel filter assembly or an air filter assembly, or a filter assembly for any other form of fluid. The valve member 6, 106 may vary, e.g. it may comprise a spherical member or it may be replaced altogether with a different type of valve. In some examples, the filter assembly 1 may comprise a ball valve.

It will also be appreciated by those skilled in the art that any number of combinations of the aforementioned features and/or those shown in the appended drawings provide clear advantages over the prior art and are therefore within the scope of the invention described herein.

## Claims

1. A filter assembly comprising a hollow pleated filter element with an open end, a support coil received within the filter element and an end cap sealingly mounted to the open end and having an outlet in fluid communication with the open end, wherein the support coil is configured to inhibit, in use, collapse of the filter element when a fluid passes from outside of the filter element to the inside thereof and through the outlet of the end cap.

2. A filter assembly according to claim 1, comprising a bypass end cap and a bypass valve, wherein the bypass end cap is sealingly mounted to a further open end of the filter element and comprises a bypass inlet, the bypass valve being biased to close the bypass inlet until the pressure exerted, in use, on the bypass valve reaches a predetermined threshold to open the bypass valve.

3. A filter assembly according to claim 2, wherein the support coil comprises a spring and the bypass valve comprises a valve member which is biased by the spring to close the bypass inlet.

4. A filter assembly according to claim 3, wherein the support coil comprises a support spring portion and a valve spring portion, the valve spring portion urging the valve member to close the bypass inlet.

5. A filter assembly according to claim 4, wherein the valve spring portion has a smaller diameter than the support spring portion.

6. A filter assembly according to claim 5, wherein the bypass end cap comprises a retainer which surrounds the bypass inlet and receives the valve member and the support spring portion.

7. A filter assembly according to claim 6, wherein one end of the support spring portion engages the end cap and the other end of the support spring portion engages the retainer of the bypass end cap.

8. A filter assembly according to any preceding claim, wherein the support coil comprises a metallic material.

9. A filter assembly according to claim 8, wherein the support coil comprises stainless steel.

10. A filter assembly according to any preceding claim, wherein the end cap comprises a spigot engagingly received within an end of the support coil.

11. A filter assembly according to claim 11, wherein the spigot comprises a passageway fluidly connecting the outlet with the inside of the filter element.

12. A filter assembly according to any preceding claim, wherein the end cap comprises a mounting feature for securing the filter assembly to a housing or tank.

13. A filter assembly according to any preceding claim, wherein the filter element is partially embedded within and/or fused to the end cap.

14. A force-feed lubrication circuit comprising a filter assembly according to any preceding claim.

15. A vehicle comprising a filter assembly according to any one of claims 1 to 13, or a vehicle lubrication circuit according to claim 14.
